# EUROPÄISCHE PATENTSCHRIFT

(11) **EP 1 047 535 B1**
(45) Veröffentlichungstag und Bekanntmachung des Hinweises auf die Patenterteilung: **29.12.2004**
(21) Anmeldenummer: 99950706.4
(22) Anmeldetag: 12.10.1999
(51) Int. Cl.: B29B 7/82, B29B 7/76, B29B 7/74, B29B 7/32, B29B 7/28

(54) **HOMOGENISIER- UND TEMPERIERBEHÄLTER**
HOMOGENIZATION AND TEMPERING CONTAINER
CONTENANT D'HOMOGENEISATION ET DE MISE A LA TEMPERATURE SOUHAITEE

(30) Priorität: 22.10.1998 DE 19848780
(43) Veröffentlichungstag der Anmeldung: 02.11.2000
(73) Patentinhaber: Krauss-Maffei Kunststofftechnik GmbH, 80997 München (DE)
(72) Erfinder: EHRLICHER, Stefan, D-80997 München (DE)
(74) Vertreter: Zollner, Richard, Dipl.-Phys.
(86) Internationale Anmeldenummer: PCT/EP1999/007636
(87) Internationale Veröffentlichungsnummer: WO 2000/024556

(56) Entgegenhaltungen:
- EP-A- 0 025 860
- DE-A- 2 908 355
- GB-A- 1 074 227
- US-A- 3 390 813
- US-A- 3 773 300
- US-A- 3 784 169
- US-A- 4 307 062
- US-A- 4 430 287

## Beschreibung

Die Erfindung bezieht sich auf einen Homogenisier- und Temperierbehälter für ein flüssiges Arbeitsmedium, insbesondere eine mit Zusatzstoffen versetzte Flüssigkomponente einer Kunststoff-Spritzgießanlage, nach dem Oberbegriff des Patentanspruchs 1.

Bekannte Behälter dieser Art, wie sie in Verbindung mit Polyurethan-Spritzgießanlagen zum Temperieren und Homogenisieren der zumeist mit Zusatzstoffen, wie Aktivatoren, Stabilisatoren und Trennmitteln oder auch Kurzfasern oder Gesteinsmehlen versetzten Polyolkomponente Verwendung finden, enthalten zur Temperaturregulierung einen äußeren, zumeist mit Wasser als Wärmeträger beschickten Behältermantel sowie ein oberhalb des Flüssigkeitsspiegels im Behälter befindliches Druckgaspolster zur Aufrechterhaltung eines definierten Behälterdrucks und zum Ausgleich von Füllmengenschwankungen. Da für eine hohe Produktqualität eine äußerst gleichmäßige und exakte Temperierung und Homogenisierung der Polyolkomponente verlangt wird, der Polyoldurchsatz, bezogen auf die Füllmenge des Behälters, im allgemeinen aber sehr gering ist, ist ein Rührwerk erforderlich, welches die Polyolfüllung mit hoher Umwälzgeschwindigkeit an dem durch den Wärmeträger temperierten Behältermantel entlangführt und durchmischt. Ein derartiges Rührwerk bildet jedoch eine störende Wärmequelle, ist konstruktiv aufwendig und erhöht den Energiebedarf, und ferner besteht dabei die Gefahr, daß Gaspartikel aus dem Gaspolster in die Polyolkomponente eingeschlagen werden und diese aufschäumt.

Aufgabe der Erfindung ist es, den Homogenisier- und Temperierbehälter der eingangs genannten Art unter Beibehalt einer hohen Produktqualität konstruktiv einfacher und energiesparender zu gestalten.

Diese Aufgabe wird erfindungsgemäß durch den im Patentanspruch 1 gekennzeichneten Homogenisier- und Temperierbehälter gelöst.

Erfindungsgemäß werden aufgrund der Unterteilung des Behältervolumens in mehrere, nacheinander jeweils im Gegenstrom vom rezirkulierten Arbeitsmedium durchsetzte Ringräume in Verbindung mit der zwangsweisen Einbeziehung sowohl der Innen- als auch der Außenflächen des Wärmetauschers in den Gegenstrompfad nicht nur die Wärmeverluste des Wärmetauschers reduziert und die Wärmeaustauschflächen wirksam vergrößert, sondern selbst bei geringen Behälterdurchsätzen hohe Strömungsgeschwindigkeiten im Behälterinneren und ein inniger Kontakt und hoher Durchmischungsgrad des rezirkulierten Arbeitsmediums mit der Behälterfüllung erzielt, ohne daß es hierfür eines baulich und energetisch aufwendigen Rührwerks bedarf, mit der Folge, daß der erfindungsgemäße Behälter in konstruktiver Hinsicht wesentlich einfacher gestaltet ist, der Energieverbrauch verringert und zugleich der Gefahr eines Aufschäumens der Flüssigkomponente im Behälter wirksam begegnet wird.

Wird, wie bei einer Polyurethan-Spritzgießanlage üblich, oberhalb des Flüssigkeitsspiegels im Homogenisier- und Temperierbehälter für die Polyolkomponente ein Gas- bzw. Luftpolster aufgebaut, so erstreckt sich die Zwischenwand gemäß Anspruch 2 mit ihrer Oberkante zweckmäßigerweise über den Flüssigkeitsspiegel im Behälter hinaus, so daß sich die Flüssigkeitsströmung im Bereich der Zwischenwand-Oberkante an diese anlegt und dadurch die Srömungsverteilung beim Übertritt zwischen benachbarten Ringräumen vergleichmäßigt und der Durchmischungsgrad weiter verbessert wird.

In weiterer, besonders bevorzugter Ausgestaltung der Erfindung ist der Wärmetauscher gemäß Anspruch 3 stromaufwärts der Ringräume im Einlaßbereich des Behälters angeordnet, also an einer Stelle, wo noch kein Temperaturausgleich zwischen dem rezirkulierten Arbeitsmedium und der Behälterfüllung stattgefunden hat und daher die Temperaturdifferenz des Arbeitsmediums zur Solltemperatur am größten ist, so daß sich am Wärmetauscher ein hoher Temperaturgradient und damit eine noch effizientere Nutzung der Wärmetauschflächen ergibt.

Als Wärmetauscher wird vorzugsweise ein Platten- oder, wie nach Anspruch 4 bevorzugt, ein Rohrbündel-Wärmetauscher verwendet.

In besonders zweckmäßiger Weise ist gemäß Anspruch 5 zumindest im Einlaufbereich eines der Ringräume eine querschnittsverengende Blende angeordnet, durch die die Strömung örtlich beschleunigt und zur Ringraummitte abgelenkt wird. Hierdurch wird die Homogenisier- und Temperierwirkung des Behälters nochmals signifikant verbessert. Dabei hat es sich als besonders vorteilhaft erwiesen, die Strömung an der Blende in eine Vielzahl paralleler Einzelströmungen aufzuteilen, was auf baulich einfache Weise dadurch erreicht wird, daß die Blende nach Anspruch 6 als vielfach gelochter, quer zur Zwischenwand verlaufender Ringkragen ausgebildet ist oder nach Anspruch 7 eine gezackte oder gewellte Umströmungskante besitzt.

Die Erfindung wird nunmehr anhand eines Ausführungsbeispiels in Verbindung mit den Zeichnungen näher erläutert. Es zeigen in stark schematisierter Darstellung:
- **Fig. 1**: eine Prinzipdarstellung einer Polyurethan-Spritzgießanlage einschließlich eines Homogenisier- und Temperierbehälters für die Polyolkomponente;
- **Fig. 2**: einen Längsschnitt des Polyolbehälters nach Fig. 1 in einer erfindungsgemäßen Ausführungsform; und
- **Fig. 3A bis 3C**: unterschiedliche Ausführungsbeispiele von im Behälterinneren angeordneten Strömungsblenden.

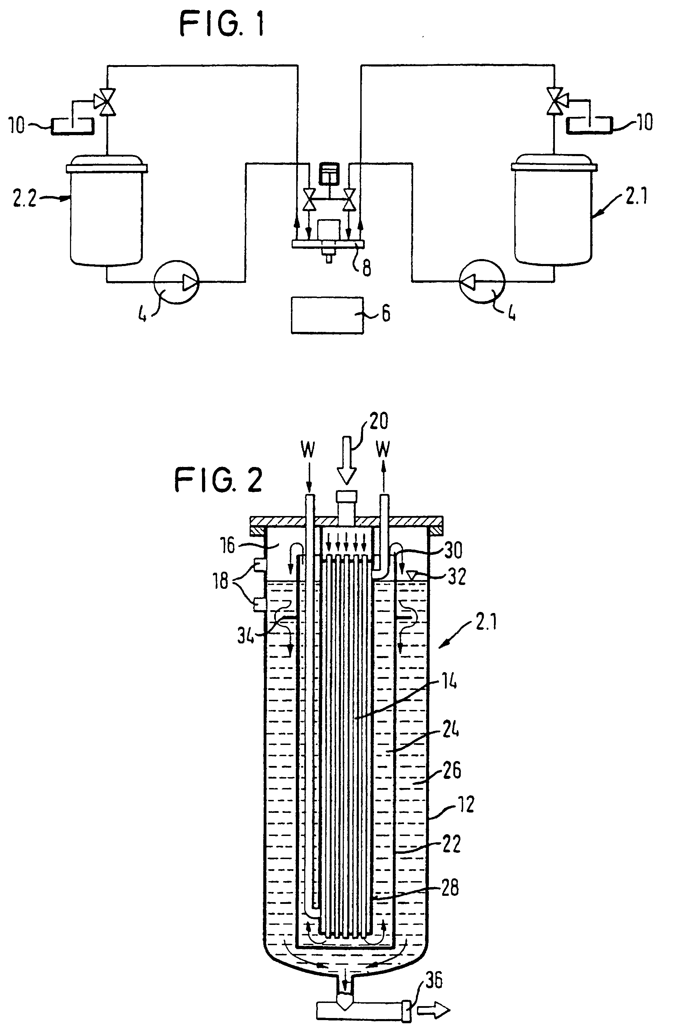

Die in Fig. 1 gezeigte Polyurethan-Spritzgießanlage enthält als Hauptbestandteile einen Polyol- und einen Isocyanat-Behälter 2.1 und 2.2 einschließlich einer Rezirkulationspumpe 4, durch die die beiden Kunststoffkomponenten jeweils getrennt voneinander einer Formstation 6 mit einem Mischkopf 8 zugeführt werden, von wo der sich beim Durchgang durch den Mischkopf 8 erwärmende Komponentenüberschuß zusammen mit einer aus einem Vorratsbehälter 10 abgezogenen, dem Komponentenverbrauch an der Formstation 6 entsprechenden Nachfüllmenge in den jeweiligen Komponentenbehälter 2.1 bzw. 2.2 zurückströmt. Aus Gründen einer hohen Produktqualität ist es erforderlich, daß die Polyolkomponente, die zumeist mit Zusatzstoffen, wie Aktivatoren, Stabilisatoren, internen Trennmitteln oder auch Kurzfasern oder Gesteinsmehlen versetzt ist, im Behälter 2.1 äußerst gleichmäßig und exakt temperiert und homogenisiert wird.

Der zu diesem Zweck benötigte Komponentenbehälter 2.1 arbeitet vollständig rührwerkfrei und enthält einen im Behälterinneren mit Abstand zur Behälterwand 12 angeordneten Rohrbündel-Wärmetauscher 14, der über seine gesamte Länge in die Polyolfüllung des Behälters 2.1 eintaucht, welche durch ein Luftpolster 16 bedrückt und über Füllstandsöffnungen 18 niveaugeregelt wird. Der Wärmetauscher 14 liegt unmittelbar abströmseitig des Behältereinlasses 20, so daß die jeweils zirkulierende Polyolmenge, die in der Regel nur ein geringes Teilvolumen der Behälterfüllung umfaßt, als erstes am Wärmetauscher 14 temperiert wird, bevor sie wieder mit der übrigen Behälterfüllung in Kontakt tritt.

Als Wärmeträger dient temperiertes Wasser, das - wie durch die Richtungspfeile W in Fig. 2 angedeutet - den Wärmetauscher 14 auf der Außenseite der Wärmetauscherrohre entgegengesetzt zur Polyolkomponente durchströmt.

Umschlossen ist der Wärmetauscher 14 von einer Zwischenwand 22 in Form eines Innenbehälters, der das Behältervolumen zwischen Wärmetauscher 14 und Behälter-Außenwand 12 in zwei zueinander koaxiale Ringräume 24 und 26 unterteilt. Die die Wärmetauscherrohre passierende Polyolkomponente wird somit am unteren Wärmetauscherende in den inneren Ringraum 24 umgelenkt und durchströmt diesen entgegengesetzt zur Strömungsrichtung in den Wärmetauscherrohren nach oben, wobei sie - nunmehr im Wärmeaustausch mit der Außenfläche 28 des Wärmetauschers 14 - weiter temperiert wird.

Im Übergangsbereich zum äußeren Ringraum 26, wo die Strömung wiederum im Gegenstrom zum Ringraum 24 verläuft, ragt die obere Überströmkante 30 der Zwischenwand 22 über den Flüssigkeitsspiegel 32 im Ringraum 26 hinaus, so daß sich die Strömung an dieser Stelle vergleichmäßigt und an die Außenseite der Zwischenwand 22 anlegt, bevor sie in die Flüssigkeitssäule im Ringraum 26 eintritt.

Kurz unterhalb des Flüssigkeitsspiegels 32 befindet sich im Ringraum 26 eine den Ringraumquerschnitt verengende Blende 34 in Form eines quer zur Zwischenwand 22 verlaufenden Ringkragens, an dem die Strömung innerhalb der Flüssigkeitssäule zur Ringraummitte hin abgelenkt wird, wodurch die Temperier- und Homogenisierwirkung weiter verbessert wird, bevor die am Mischkopf 8 benötigte Polyolmenge mittels der Rezirkulationspumpe 4 über den Behälterauslaß 36 abgezogen wird.

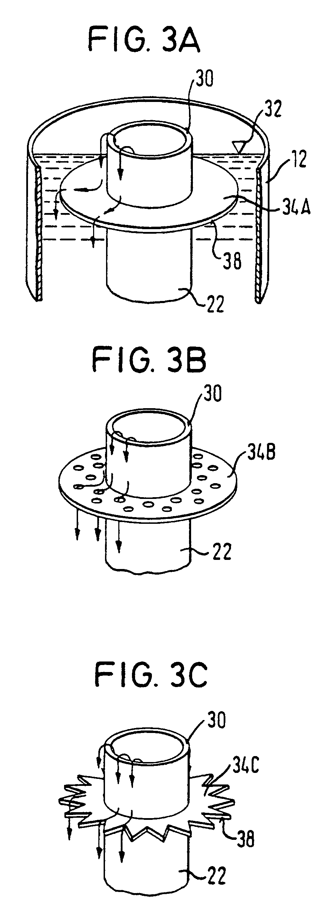

In Fig. 3 ist die Blende 34 in verschiedenen Ausführungsformen dargestellt. Gemäß Fig. 3A besitzt die Blende 34A eine kreisförmige Umströmungskante 38, die zusammen mit der Behälterwand 12 einen konstanten Ringspalt begrenzt. Nach Fig. 3B ist die Blende 34 als vielfach gelochter Ringkragen 34B ausgebildet, an welchem die Strömung in der Flüssigkeitssäule örtlich in eine Vielzahl diskreter Einzelstränge aufgespalten und die Grenzfläche zwischen dem stehenden und dem strömenden Flüssigkeitsvolumen in der Flüssigkeitssäule vergrößert wird, während die Blende 34C nach Fig. 3C eine gezackte oder gewellte Umströmungskante 38 besitzt, durch die zusätzlich zur Grenzflächenvergrößerung eine weitgehend gleichförmige radiale Strömungsaufteilung über den Ringraumquerschnitt erzielt wird.

## Patentansprüche

1. Homogenisier- und Temperierbehälter für ein flüssiges Arbeitsmedium, insbesondere für eine mit Zusatzstoffen versetzte Flüssigkomponente einer Kunststoff-Spritzgießanlage, mit einem das Arbeitsmedium temperierenden Wärmetauscher und einer Rezirkulationspumpe zur Rückführung des Arbeitsmediums vom Behälteraus-zum Behältereinlaß,
**dadurch gekennzeichnet, daß**
der Wärmetauscher (14) in das Arbeitsmedium eingetaucht im Behälterinneren im Abstand zur Behälterwand (12) angeordnet und von mindestens einer, den Behälter (2.1) in zueinander konzentrische Ringräume (24,26) unterteilenden Zwischenwand (22) umschlossen ist, derart, daß der Strömungspfad des rezirkulierten Arbeitsmediums jeweils im Gegenstrom durch den Wärmetauscher und die Ringräume verläuft.

2. Homogenisier- und Temperierbehälter nach Anspruch 1, mit einem oberhalb des Flüssigkeitsspiegels im Behälter befindlichen Gaspolster,
**dadurch gekennzeichnet, daß**
die Zwischenwand (22) sich mit ihrer Oberkante (30) über den Flüssigkeitsspiegel (32) im Behälter (2.1) hinaus erstreckt.

3. Homogenisier- und Temperierbehälter nach Anspruch 1 oder 2,
**dadurch gekennzeichnet, daß**
der Wärmetauscher (14) stromaufwärts der Ringräume (24,26) im Einlaßbereich (20) des Behälters (2.1) angeordnet ist.

4. Homogenisier- und Temperierbehälter nach einem der vorhergehenden Ansprüche,
**dadurch gekennzeichnet, daß**
der Wärmetauscher (14) als Rohrbündel-Wärmetauscher ausgebildet ist.

5. Homogenisier- und Temperierbehälter nach einem der vorhergehenden Ansprüche,
**dadurch gekennzeichnet, daß**
zumindest im Einlaufbereich eines der Ringräume (26) eine querschnittsverengende Blende (34) angeordnet ist.

6. Homogenisier- und Temperierbehälter nach Anspruch 5,
**dadurch gekennzeichnet, daß**
die Blende (34) als quer zur Zwischenwand verlaufender, vielfach gelochter Ringkragen (34B) ausgebildet ist.

7. Homogenisier- und Temperierbehälter nach Anspruch 5 oder 6,
**dadurch gekennzeichnet, daß**
die Blende (34C) eine gezackte oder gewellte Umströmungskante (38) besitzt.

## Claims

1. Container for homogenisation and temperature control of a liquid working medium, in particular for a liquid component provided with additives, of a plastics material injection moulding system, comprising a heat exchanger controlling the temperature of the working medium and a recirculation pump for recycling the working medium from the container outlet to the container inlet, **characterised in that** the heat exchanger (14) is arranged immersed in the working medium in the container interior at a spacing from the container wall (12) and is surrounded by at least one partition wall (22) dividing the container (2.1) into annular spaces (24, 26) which are concentric in relation to one another, in such a way that the flow path of the recirculated working medium in each case runs in counterflow through the heat exchanger and the annular spaces.

2. Container for homogenisation and temperature control according to claim 1, comprising a gas cushion located above the liquid level in the container, **characterised in that** the partition wall (22) extends with its upper edge (30) beyond the liquid level (32) in the container (2.1).

3. Container for homogenisation and temperature control according to claim 1 or 2, **characterised in that** the heat exchanger (14) is arranged upstream of the annular spaces (24, 26) in the inlet region (20) of the container (2.1).

4. Container for homogenisation and temperature control according to any one of the preceding claims, **characterised in that** the heat exchanger (14) is designed as a tubular heat exchanger.

5. Container for homogenisation and temperature control according to any one of the preceding claims, **characterised in that** a diaphragm(34) restricting the cross-section is arranged at least in the inlet region of one of the annular spaces (26).

6. Container for homogenisation and temperature control according to claim 5, **characterised in that** the diaphragm (34) is designed as an annular collar (34B) with a plurality of holes extending transverse to the partition wall.

7. Container for homogenisation and temperature control according to claim 5 or 6, **characterised in that** the diaphragm (34C) has a serrated or wavy flow-by edge (38).

## Revendications

1. Récipient d'homogénéisation et de thermorégulation pour un fluide d'exploitation liquide, en particulier pour un composant liquide mélangé avec des additifs d'une unité de moulage par injection, avec un échangeur de chaleur qui assure la thermorégulation du fluide d'exploitation et une pompe de recirculation pour ramener le fluide d'exploitation de la sortie du récipient vers l'entrée du récipient,
**caractérisé en ce que**
l'échangeur de chaleur (14) est disposé plongé dans le fluide d'exploitation à l'intérieur du récipient à distance de la paroi du récipient (12) et est entouré d'au moins une paroi intermédiaire (22) qui partage le récipient (2.1) en espaces annulaires (24, 26) concentriques l'un par rapport à l'autre, de telle manière que la voie d'écoulement du fluide d'exploitation qui recircule passe respectivement à contre-courant à travers l'échangeur de chaleur et les espaces annulaires.

2. Récipient d'homogénéisation et de thermorégulation selon la revendication 1, avec un coussin de gaz se trouvant au-dessus de la surface du liquide dans le récipient,
**caractérisé en ce que**
la paroi intermédiaire (22) s'étend, avec son bord supérieur (30), au-delà de la surface du liquide (32) dans le récipient (2.1).

3. Récipient d'homogénéisation et de thermorégulation selon la revendication 1 ou 2,
**caractérisé en ce que**
l'échangeur de chaleur (14) est disposé en amont des espaces annulaires (24, 26) dans la zone d'entrée (20) du récipient (2.1).

4. Récipient d'homogénéisation et de thermorégulation selon une des revendications précédentes,
**caractérisé en ce que**
l'échangeur de chaleur (14) a la forme d'un échangeur de chaleur à faisceau tubulaire.

5. Récipient d'homogénéisation et de thermorégulation selon une des revendications précédentes,
**caractérisé en ce que**,
un obturateur (34) qui réduit la section transversale est disposé au moins dans la zone d'entrée d'un des espaces annulaires (26).

6. Récipient d'homogénéisation et de thermorégulation selon la revendication 5,
**caractérisé en ce que**
l'obturateur (34) a la forme d'un collet annulaire à perforations multiples (34B) perpendiculaire à la paroi intermédiaire.

7. Récipient d'homogénéisation et de thermorégulation selon la revendication 5 ou 6,
**caractérisé en ce que**
l'obturateur (34C) possède un bord d'écoulement de contournement (38) dentelé ou ondulé.
